# FASCICULE DE BREVET EUROPEEN

(11) **EP 1 869 727 B1**
(45) Date de publication et mention de la délivrance du brevet: **08.05.2019**
(21) Numéro de dépôt: 06725590.1
(22) Date de dépôt: 05.04.2006
(51) Int. Cl.: H01Q 7/00, H01Q 1/32, H01Q 11/14, G06K 19/077

(54) **DISPOSITIF D'ANTENNE RADIOFREQUENCE A BOUCLES ORTHOGONALES**
FUNKFREQUENZVORRICHTUNG MIT ORTHOGONALE SCHEIFENANTENNEN
ORTHOGONAL LOOP RADIOFREQUENCY ANTENNA DEVICE

(30) Priorité: 06.04.2005 FR 0503447
(43) Date de publication de la demande: 26.12.2007
(73) Titulaire: Valeo Sécurité Habitacle, 94046 Créteil Cedex (FR)
(72) Inventeur: BELINGUIER, Thierry, c/o Valeo Securite Habitacle, F-94042 Créteil Cedex (FR); DUBAN, Bruno, c/o Valeo Securite Habitacle, F-94042 Créteil Cedex (FR)
(74) Mandataire: Pothmann, Karsten
(86) Numéro de dépôt international: PCT/EP2006/061360
(87) Numéro de publication internationale: WO 2006/106126

(56) Documents cités:
- EP-A- 1 298 761
- EP-A- 1 376 762
- EP-A- 1 594 188
- DE-A1- 19 533 105
- FR-A- 2 865 329
- US-A- 6 052 091
- US-A1- 2003 184 493
- US-B1- 6 229 492

## Description

### Domaine de l'invention

La présente invention concerne un dispositif d'antenne radiofréquence à boucles orthogonales.

Elle convient tout particulièrement à la réception radiofréquence en milieu confiné, et notamment dans les espaces limités principalement par des parois métalliques, tels les habitacles de véhicules terrestres.

### Etat de la technique

D'une façon générale, on sait que pour obtenir ce résultat, la réponse technique actuelle consiste à utiliser des antennes de type monopôle, de type dipôle, de type patch, etc. et de manière plus générale des antennes type boucle.

Ces antennes de réception sont notamment exploitées dans les dispositifs de télécommande radiofréquence, de système d'accès et de démarrage dits mains libres, d'alarmes sans fil, d'ouverture de portes de garage, de commande d'éclairage, de volets roulants, ainsi que dans les dispositifs de télémesures.

A l'intérieur d'un habitacle d'un véhicule, compte tenu des réflexions multiples provoquées par la présence de nombreuses parois principalement métalliques, la réception radiofréquence peut être dégradée notamment due au fait que la polarisation de l'onde captée par l'antenne boucle ne correspondra pas obligatoirement à la polarisation correspondant à la sensibilité maximum de détection.

Par voie de conséquence, la portée radiofréquence de l'émetteur autour de l'habitacle du véhicule s'en trouvera réduite en valeur moyenne, d'une part, et en homogénéité, d'autre part, tout autour du véhicule.

D'autre part, pour des raisons de construction mécaniques du véhicule et d'encombrement, il est nécessaire d'optimiser la place prise par cette antenne radiofréquence.

Le document DE19533105 divulgue un dispositif d'antennes à boucles orthogonales utilisé dans un véhicule automobile.

### Objet de l'invention

L'invention a donc plus particulièrement pour but de supprimer ces inconvénients.

Elle propose donc un dispositif d'antenne radiofréquence à boucles orthogonales disposée à proximité d'une antenne basse fréquence et faisant intervenir au moins deux boucles constituées d'un conducteur électrique unique, chacune desdites boucles pouvant être de forme quelconque et situées dans leur plan respectif, lesdits plans contenant chacun une desdites boucles étant orthogonaux..

Ainsi, comme on le verra en détail plus loin, on aura non seulement une amélioration de la réception des signaux radiofréquences grâce à la configuration de l'antenne radiofréquence, mais également une optimisation de la place prise par cette antenne radiofréquence, puisqu'on l'associe avec une antenne basse fréquence de sorte à éviter de mettre chacune desdites antennes à deux endroits différents dans le véhicule.

Selon des modes de réalisation non limitatifs, le dispositif selon l'invention présente les caractéristiques supplémentaires suivantes.
- Avantageusement, la forme des susdites boucles pourra être circulaire, carrée, rectangulaire ; les formes des susdites boucles pourront ne pas être identiques ; ainsi l'une desdites boucles sera de forme circulaire, l'autre desdites boucles sera de forme rectangulaire.
- Par ailleurs, lesdits deux plans orthogonaux contenant chacun une desdites boucles de l'antenne radiofréquence pourront être situés d'une manière quelconque dans le repère orthonormé ; préférentiellement, l'une desdites boucles sera contenue dans un plan vertical ; l'autre desdites boucles sera contenue dans un plan horizontal.
- Les deux boucles de l'antenne radiofréquence sont connectées en série, ou en parallèle.
- Avantageusement, le conducteur électrique d'une antenne sera réalisé dans un matériau à faible résistivité ohmique, tel du cuivre, de l'aluminium ou de ses alliages, du nickel, de l'argent, ou d'une association de plusieurs métaux, telle du cuivre recouvert d'une couche d'or ; la section du conducteur électrique pourra être avantageusement circulaire, carrée ou rectangulaire ou même quelconque. Ainsi, le matériau de faible résistivité permet de diminuer les pertes par effet joules. Le signal reçu est moins dégradé.
- Par ailleurs, l'ensemble constitué desdites boucles pourra être enrobé dans un matériau diélectrique tel un PTFE, PET, PVC, ou autres, de manière à garantir une rigidité satisfaisante de l'ensemble.
- Bien entendu, les dimensions desdites boucles de l'antenne radiofréquence sont déterminées par la fréquence de l'onde électromagnétique du signal radiofréquence reçu; un compromis acceptable entre un dimensionnement le plus réduit possible pour pouvoir s'adapter aux contraintes mécaniques du véhicule (à savoir pouvoir intégrer les boucles dans un espace restreint du véhicule) et un niveau de détection le plus élevé possible.
- Avantageusement, le dispositif d'antenne pourra être intégré dans un module situé en haut de la colonne de direction, ou dans un calculateur qui gère les capteurs et actionneurs de l'habitacle.
- Le dispositif radiofréquence est surmoulé avec ladite antenne basse fréquence.
- L'antenne basse fréquence est associée à des circuits, de type circuits bouchons, qui sont à haute impédance à la fréquence de travail de l'antenne radiofréquence.
- Les circuits bouchons permettent d'éviter une résonance de l'antenne basse fréquence à la fréquence de travail de l'antenne radiofréquence.
- Ces circuits à haute impédance comprennent un filtre coupe bande haute fréquence.
- L'antenne radiofréquence est accordée au moyen de circuits d'adaptation.
- L'antenne basse fréquence est en charge de la fonction autorisant le démarrage.

Dans ce type de configuration topologique, les circuits électroniques associés à l'antenne radiofréquence permettront notamment de gérer les fonctions de type accès au véhicule avec ou sans commandes mains libres, etc. Quant aux circuits électroniques associés à l'antenne basse fréquence, ils permettront notamment de gérer les fonctions de type autorisation de démarrage et plus particulièrement la fonction déverrouillage antivol pour permettre le démarrage.

Selon un deuxième objet, elle concerne :
un dispositif d'antennes comprenant un dispositif d'antenne radiofréquence selon l'une quelconque des caractéristiques précédentes, et une antenne basse fréquence, les deux antennes étant disposées à proximité l'une de l'autre.

Selon ce second objet, de façon non limitative, l'antenne radiofréquence est accordée au moyen de circuits d'adaptation.

Selon un troisième objet, l'invention concerne :

Un système électronique qui comprend un dispositif d'antenne radiofréquence situé à proximité d'une antenne basse fréquence, le tout formant un dispositif d'antennes mixte, - une carte électronique associée au dispositif d'antenne et à l'antenne basse fréquence comprenant au moins un circuit, de type circuit « bouchon », associé à l'antenne basse fréquence, qui est à haute impédance à la fréquence de travail de l'antenne radiofréquence.

Selon des modes de réalisation non limitatifs, le système comprend les caractéristiques supplémentaires suivantes :
- la carte électronique se situe dans un plan parallèle à une boucle de l'antenne radiofréquence.
- le système électronique comprend en outre une capacité en série avec l'antenne basse fréquence.
- le système électronique comprend en outre moins un circuit d'adaptation pour accorder l'antenne radiofréquence.

Selon un quatrième objet, l'invention concerne :
Une carte électronique destiné à coopérer avec le dispositif d'antenne radiofréquence le dispositif d'antenne radiofréquence comprenant une antenne radiofréquence située à proximité d'une antenne basse fréquence qui comprend :
- un récepteur radiofréquence destiné à coopérer avec l'antenne radiofréquence,
- un émetteur-récepteur basse fréquence destiné à coopérer avec l'antenne basse fréquence,
- au moins un circuit, de type circuit « bouchon », associé à l'antenne basse fréquence, qui est à haute impédance à la fréquence de travail de l'antenne radiofréquence.

De manière non limitative, la carte électronique comprend en outre au moins un circuit d'adaptation pour accorder l'antenne radiofréquence.

### Brève description des figures

Un mode d'exécution sera décrit ci-après, à titre d'exemple non limitatif, avec référence aux dessins annexés dans lesquels :
- la figure 1 est une vue en perspective d'un premier exemple d'un dispositif radiofréquence selon l'invention,
- la figure 2 est une vue de dessus du dispositif radiofréquence selon l'invention,
- la figure 3 est une première vue en élévation du dispositif radiofréquence selon l'invention,
- la figure 4 est une seconde vue en élévation du dispositif radiofréquence selon l'invention,
- la figure 5 est une vue en perspective du dispositif radiofréquence enrobé selon l'invention,
- la figure 6 est un diagramme de portée d'émission radiofréquence comparative dans le cas d'un habitacle de véhicule,
- la figure 7 est une vue en perspective d'un dispositif d'antennes mixte comprenant le dispositif d'antenne radiofréquence des figures précédentes sans surmoulage et une antenne basse fréquence,
- la figure 8 est une vue en perspective du dispositif d'antennes de la figure 7 avec surmoulage,
- La figure 9 représente schématiquement un système électronique comprenant le dispositif d'antennes des figures 7 et 8.

### Description détaillée de modes de réalisation non limitatifs de l'invention

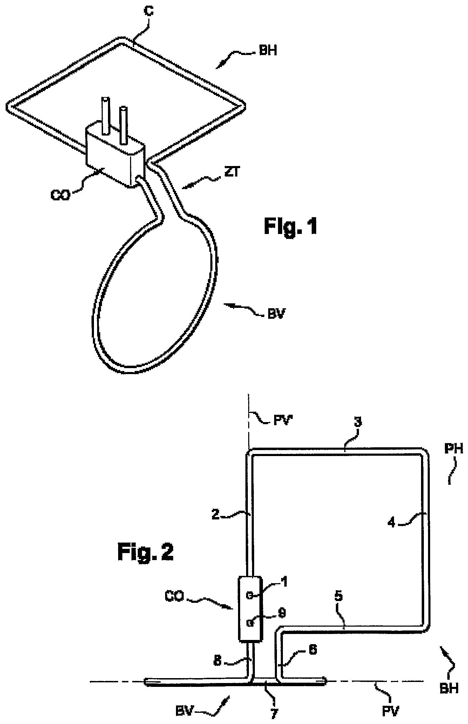

Sur la figure 1, le dispositif d'antenne radiofréquence à boucles orthogonales est essentiellement constitué d'un conducteur électrique C formant une première boucle BH de forme carrée située dans un plan horizontal, une seconde boucle BV de forme circulaire située dans un plan vertical, une zone de transition ZT constituant la liaison entre lesdites boucles BH, BV, et une zone de connexion CO correspondant aux deux extrémités dudit conducteur électrique C.

Dans cet exemple non limitatif, lesdites extrémités du conducteur électrique C sont situées dans un plan vertical perpendiculaire audit plan vertical contenant la seconde boucle BV. Les deux boucles BH et BV sont ainsi connectées en série.

Dans un autre exemple non limitatif, lesdites extrémités du conducteur électrique C sont situées dans le plan de l'une desdites boucles. Par exemple, elles peuvent être situées dans le plan de la seconde boucle BV. A cet effet, elles seront par exemple situées sur la zone de transition ZT. Dans ce cas, les deux boucles BH et BV sont soit connectées en parallèles, soit connectées en série.

On notera que la zone de connexion CO permet de connecter l'antenne radiofréquence à un récepteur radiofréquence.

L'antenne radiofréquence est ainsi réalisée de manière à favoriser la réception des ondes électromagnétiques suivant les deux polarisations du signal radiofréquence reçu. Polarisation horizontale et polarisation verticale.

Le fait que les boucles soient orthogonales présente l'avantage de prendre en compte les deux polarisations du signal émis par l'émetteur radiofréquence, à savoir la clef dans le cas de l'application véhicule.

Sur la figure 2, le dispositif d'antenne radiofréquence à boucles orthogonales est schématiquement indiqué selon une vue de dessus.

La susdite boucle BH est située dans le plan horizontal PH ; la susdite boucle BV est située dans le plan vertical PV ; les extrémités du susdit conducteur électrique C sont situées dans le plan vertical PV', lequel est orthogonal aux dits plans PH, PV.

La boucle BH, de forme carrée, est constituée d'un premier brin d'extrémité 1 rectiligne situé dans le plan PV', d'un second brin 2 rectiligne perpendiculaire au plan PV, d'un troisième brin 3 rectiligne parallèle au plan PV, d'un quatrième brin 4 rectiligne perpendiculaire au plan PV et, ici, de longueur supérieure à celle dudit brin 2, d'un cinquième brin 5 rectiligne parallèle au plan PV et, ici, de longueur inférieure à celle dudit brin 3.

La boucle BV, de forme circulaire et située dans le plan PV, est constituée d'un brin 7 de forme circulaire, n'effectuant pas la totalité de la périphérie du cercle correspondant.

Une première extrémité du brin 7 est prolongée d'un brin 6 situé dan un plan parallèle au plan PV' constituant la liaison électrique entre ladite boucles BH en prolongement du brin 5, et ladite boucle BV ; la seconde extrémité du brin 7 est prolongée d'un brin 8 situé dans le plan PV', lequel est prolongé par un brin 9 rectiligne, parallèle au susdit brin 1 et constituant la seconde extrémité du conducteur électrique C.

Ainsi, si la longueur d'onde de l'onde électromagnétique du signal radiofréquence détectée par le dispositif radiofréquence, est nettement supérieure aux dimensions des différents brins cités précédemment, le courant induit par le champ électromagnétique est quasiment constant en parcourant les brins 1, 2, 3, 4, 5, 6, 7, 8, 9 ; Ainsi, le fait que l'antenne radiofréquence soit plus petite que la longueur d'onde du fait des contraintes mécaniques du véhicule (à savoir de l'espace disponibles pour placer les deux boucles radiofréquence), n'est pas gênant ; la force électromotrice induite est captée entre les deux brins d'extrémités 1, 9 ; celle-ci est proportionnelle aux surfaces des boucles BH, BV et à l'amplitude du champ électrique E détecté.

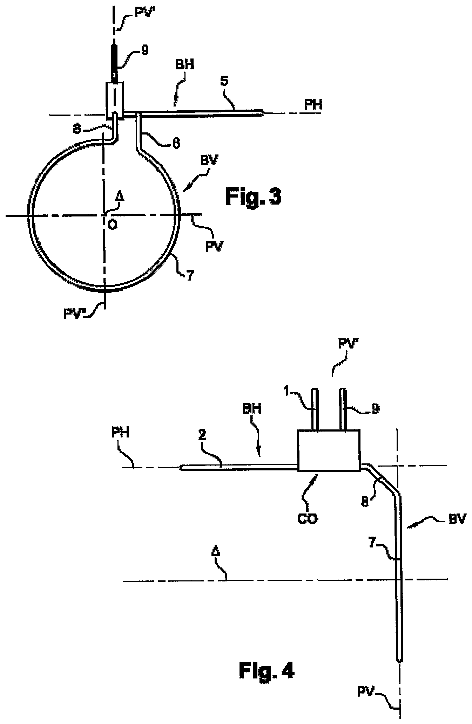

Dans l'exemple représenté sur la figure 3, le dispositif d'antenne radiofréquence à boucles orthogonales est schématiquement indiqué selon une première vue en élévation.

La susdite boucle BH est située dans le plan horizontal PH ; la susdite boucle BV est située dans le plan vertical PV ; les extrémités du susdit conducteur électrique C sont situées dans le plan vertical PV', lequel est orthogonal aux dits plans PH, PV.

La boucle BH est uniquement représentée par le brin 5 ; la boucle BV est représentée par le brin 7 ; la susdite zone de transition ZT est constituée des deux brins 6, 8 ; la susdite zone de connexion CO est uniquement représentée par le brin 9.

La boucle BV, de centre O et de diamètre proche de la longueur des susdits brins 3, ou 4, est centrée sur un axe Δ horizontal ; lequel axe Δ est situé dans un plan vertical PV", parallèle au plan PV' ; lequel plan PV" est situé du côté opposé à la boucle BH par rapport au plan PV'.

Dans l'exemple représenté sur la figure 4, le dispositif d'antenne radiofréquence à boucles orthogonales est schématiquement indiqué selon une seconde vue en élévation.

La susdite boucle BH est située dans le plan horizontal PH ; la susdite boucle BV est située dans le plan vertical PV ; les extrémités du susdit conducteur électrique C sont situées dans le plan vertical PV', lequel est orthogonal aux dits plans PH, PV.

La boucle BH est uniquement représentée par le brin 2 ; la boucle BV est représentée par le brin 7 ; la susdite zone de transition ZT est uniquement représentée par le brin 8 ; la susdite zone de connexion CO est représentée par les brins 1, 9.

Les susdits brins 6, 8, sont contenus respectivement dans un plan parallèle au plan PV' et dans le plan PV'. Dans l'exemple représenté sur la figure 4, ces brins font un angle proche de 45 degrés par rapport au plan PV ou de 315 degrés par rapport au plan PH. Ceci est du à certaines contraintes mécaniques du véhicule. Evidemment, cet angle peut prendre d'autres valeurs adaptées pour ces contraintes mécaniques.

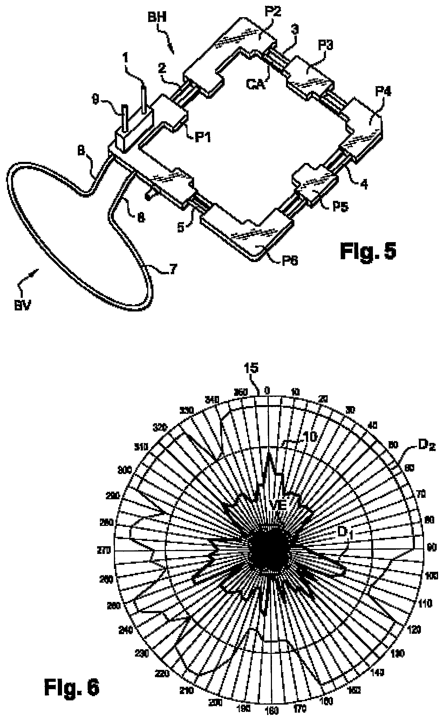

Dans l'exemple représenté sur la figure 5, le dispositif d'antenne radiofréquence à boucles orthogonales est schématiquement indiqué selon une vue en perspective.

La susdite boucle BH est représentée par les brins 2, 3, 4, 5 ; la susdite boucle BV est représentée par le brin 7 ; la susdite zone de transition ZT est représentée par les brins 6, 8 ; la susdite zone de connexion est représentée par les brins 1, 9.

Un cadre CA, situé dans le plan PH, est inscrit dans la boucle BH et constitue un élément de référence de rigidité ; lequel cadre CA est en liaison sur sa périphérie avec la susdite boucle BH par l'intermédiaire de pavés P₁, P₂, P₃, P₄, P₅, P₆.

Les susdits pavés P₁, P₂, P₃, P₄, P₅, P₆, ainsi que le susdit cadre CA sont réalisés en matériau diélectrique, tel le PTFE, le PTE, le PVC, ou autres, et permettent de garantir ainsi une rigidité satisfaisante de l'ensemble du dispositif radiofréquence. On notera que concernant l'antenne basse fréquence qui sera décrite par la suite, elle est également réalisée dans un matériau isolant de type PTFE, PTE, ou PVC.

Ainsi, le dispositif d'antenne radiofréquence à boucles orthogonales favorise la réception des ondes électromagnétiques suivant deux polarisations, lesquelles polarisations, en fonction de la position respectives desdites boucles BH, BV, peuvent être respectivement horizontale et verticale.

En d'autres termes, pour une puissance d'émission donnée, dans un milieu confiné, et notamment dans des espaces limités principalement par des parois métalliques, tels les habitacles de véhicules terrestres, la puissance détectée par le récepteur radiofréquence en aval de ladite antenne à boucles orthogonales sera plus importante ; de même, l'homogénéité de la portée radioélectrique de l'ensemble récepteur/émetteur radiofréquence. s'en trouve améliorée. On notera que l'émetteur radiofréquence est, par exemple la clef de contact avec la fonction radiofréquence pour ouverture télécommandée, ou le badge mains libre etc De plus, la distance moyenne de communication est améliorée. On notera que dans tous les exemples non limitatifs cités précédemment, bien entendu, le conducteur électrique unique peut être remplacé par exemple par deux conducteurs électriques soudés entre eux, bien que cette solution soit moins intéressante du fait du problème de rupture ou d'oxydation au niveau de la soudure ou encore de résistivité plus importante.

Dans l'exemple représenté sur la figure 6, un diagramme de portée radioélectrique est indiqué sous une forme normalisée dans le cas d'une antenne conventionnelle et dans le cas d'une antenne radiofréquence décrite dans les figures précédentes.

Le diagramme est constitué de cercles concentriques autour d'un centre O ; l'incrément entre cercles est de 1 mètre. La représentation de la portée est limitée à 15 mètres mais du fait des dimensions de la salle de test (chambre an échoïque), la portée maximum sera limitée à 14 mètres.

Au centre du diagramme, un véhicule VE est schématiquement représenté sous forme d'un rectangle dont la longueur est voisine de 4 mètres et la largeur est voisine de 2 mètres.

Le diagramme de portée radioélectrique D1 dans le cas d'une antenne conventionnelle est très variable autour du centre O ; la portée est proche de zéro à l'arrière du véhicule VE, proche de 2 mètres de part et d'autre du véhicule VE et proche de 10 mètres à l'avant du véhicule VE.

Le diagramme de portée radioélectrique D2 dans le cas d'une antenne radiofréquence décrite dans les figures précédentes est quasiment homogène autour du centre O ; la portée est supérieure à 8 mètres à l'arrière du véhicule VE, supérieure à 10 mètres de part et d'autre du véhicule VE et supérieure à 14 mètres à l'avant du véhicule VE.

Le dispositif d'antenne radiofréquence à boucles orthogonales peut être avantageusement exploité dans les applications automobiles ; il peut être intégré dans un endroit quelconque de l'habitacle du véhicule, et notamment dans un module situé en haut de la colonne de direction, ou dans un calculateur qui gère les capteurs et actionneurs dudit habitacle.

Une antenne radiofréquence est disposée à proximité de l'antenne basse fréquence en charge de la fonction autorisant le démarrage dans le cas de l'application véhicule; Le dispositif radiofréquence décrit peut être surmoulé ou encapsulé avec ladite antenne basse fréquence dans un mode de réalisation non limitatif. Dans un autre exemple, on peut avoir également deux surmoulages différents pour les deux antennes, les deux surmoulages étant fixés par des clips.

L'ensemble forme un dispositif d'antennes mixte RF/BF.

On rappellera que les radiofréquences sont de l'ordre de la dizaine de méga hertz jusqu'au giga hertz, tandis que les basses fréquences sont de l'ordre de la centaine de kilohertz jusqu'à à peu près un Méga-hertz.

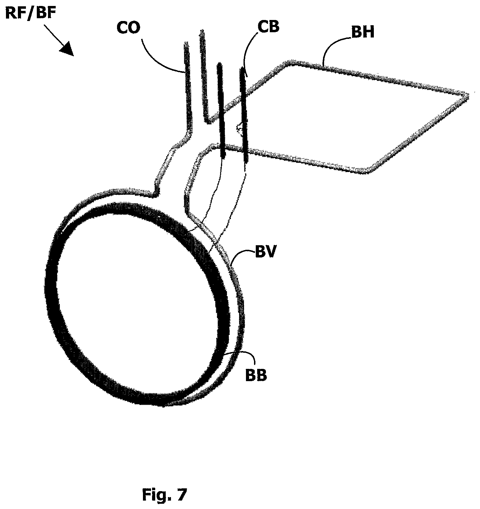

Ainsi, les deux antennes radiofréquence et basse fréquence se situent à proximité l'une de l'autre de telle sorte qu'il existe un couplage électromagnétique entre elles. En pratique, la distance entre les deux antennes sera inférieure à la taille d'une boucle d'une antenne, et plus précisément, cela concerne par exemple la distance entre une des boucles, ici la deuxième boucle BV de l'antenne radiofréquence RF_A et la boucle BB de l'antenne basse fréquence BF_A, comme illustré à la figure 7. Une antenne basse fréquence est de type boucle BB multi spires avec un conducteur électrique C' (ou une pluralité de conducteurs soudés entre eux). Sur la figure 7, on peut voir les deux extrémités de connexion CO de l'antenne radiofréquence et deux autres extrémités de connexion CB pour l'antenne basse fréquence, ces deux dernières extrémités CB permettant une connexion à un émetteur-récepteur basse fréquence.

On notera que, le conducteur électrique de chacune des antennes radiofréquence et basse fréquence sera réalisé dans un matériau à faible résistivité ohmique, tel du cuivre, de l'aluminium ou de ses alliages, du nickel, de l'argent, ou d'une association de plusieurs métaux, telle du cuivre recouvert d'une couche d'or ; la section du conducteur électrique pourra être avantageusement circulaire, carrée ou rectangulaire ou même quelconque. Ainsi, le matériau de faible résistivité permet de diminuer les pertes par effet joules. Le signal radiofréquence ou basse fréquence ainsi reçu sera moins dégradé.

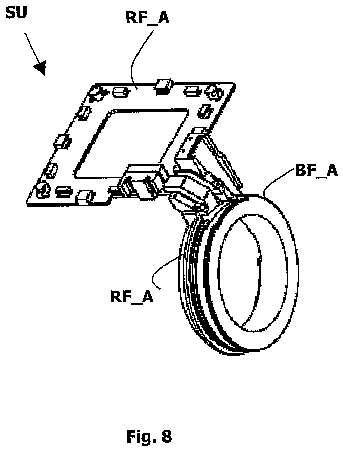

De manière avantageuse, une des deux boucles du dispositif d'antenne radiofréquence RF_A décrit pourra être surmoulée ou encapsulée avec l'antenne basse fréquence BF_A du dispositif d'anti-démarrage, comme illustré à la figure 8, permettant ainsi un gain de place, par exemple au niveau du haut de colonne de direction dans le cas où le dispositif d'antennes mixte RF/BF est inclus dans la colonne de direction. Le surmoulage SU ou l'cncapsulation dans une pièce plastique permet de garantir une bonne rigidité de l'ensemble.

On notera qu'une antenne basse fréquence BF_A est en charge de la fonction autorisant le démarrage, appelé communément, dispositif d'anti-démarrage codé dans le cas d'une application véhicule. Plus particulièrement, elle permet le déverrouillage de l'antivol via un composant appelé contrôle moteur bien connu de l'homme du métier.

Dans le cas illustré à la figure 7, l'antenne radiofréquence RF_A représentée est conçue de manière à former une boucle dans le plan horizontal et une boucle dans le plan vertical. Elle est constituée d'un fil rigide, de préférence cuivré, d'un seul morceau.

L'antenne radiofréquence à deux boucles est accessible en deux points CO, l'antenne boucle BF est accessible en deux autres points CB.

L'antenne boucle basse fréquence BF_A est ici concentrique à l'antenne boucle radiofréquence. Elle peut être, dans des modes de réalisation non limitatifs, soit d'un diamètre plus grand, soit plus petit que le diamètre de la boucle, ici BV, de l'antenne radiofréquence, soit d'un diamètre identique si elle est dans un plan parallèle à celui de la boucle, plan parallèle proche en comparaison à la taille de l'antenne.

Dans le cas où elle est d'un diamètre différent, la boucle de l'antenne basse fréquence est soit dans un même plan soit dans un plan différent de la boucle radiofréquence.

La forme de la section du fil ainsi que les géométries des boucles des antennes radiofréquence ou basse fréquence peuvent être quelconques.

Dans le cas d'une association du dispositif d'antenne radiofréquence décrite dans les figures précédentes avec une antenne basse fréquence, il est nécessaire de limiter le couplage entre le dispositif d'antenne radiofréquence et le dispositif d'antenne basse fréquence, pour éviter des perturbations entre ces deux dispositifs radiofréquence et basse fréquence. En effet, même si elles ne travaillent pas aux mêmes fréquences, il existe des couplages parasites du fait de leur proximité. Le bilan RF du dispositif Radio peut être ainsi dégradé, de même que les marges de transmission du dispositif BF peuvent être réduites. Il y a ainsi un risque de non démarrage du véhicule et de réduction de la portée d'ouverture des portes du véhicule dans le cas de l'application décrite.

Afin d'éviter ces inconvénients, il est prévu de disposer des composants/circuits à forte impédance sur le circuit de l'antenne basse fréquence, par exemple, des circuits « bouchons » qui permettent d'éviter une résonance de l'antenne basse fréquence à la fréquence de travail de l'antenne radiofréquence, diminuant ainsi tout risque de perturbation entre les deux dispositifs d'antenne radiofréquence et basse fréquence. La fréquence de travail de l'antenne radiofréquence est celle de l'émetteur radiofréquence.

Ces circuits « bouchons » sont ainsi à forte impédance lorsque le dispositif d'antennes mixte RF/BF fonctionne à une fréquence se situant dans les radiofréquences et de faible impédance lorsque le dispositif d'antennes RF/BF fonctionne à basse fréquence. Ces circuits « bouchons » sont associés à l'antenne basse fréquence.

Il est prévu en outre de disposer de composants/circuits d'adaptation associés à l'antenne radiofréquence, afin d'accorder l'antenne radiofréquence à la fréquence de travail de l'antenne radiofréquence (c'est-à-dire à celle de l'émetteur radiofréquence).

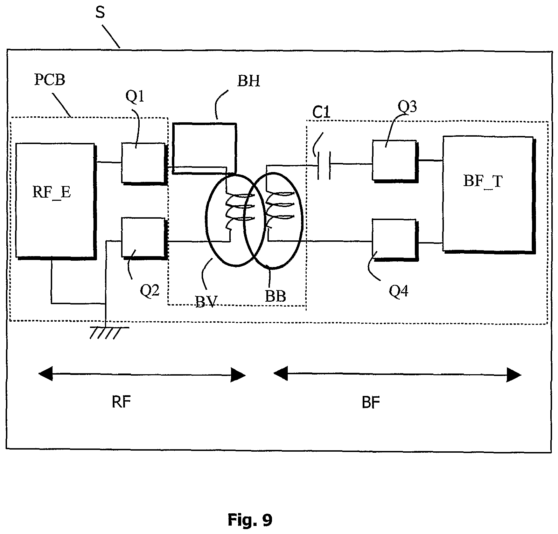

Un système S intégrant le dispositif d'antennes RF/BF ainsi que de tels circuits « bouchons » et circuits d'adaptation est illustré à la figure 9.

Un tel système S comporte :
- Pour la partie radiofréquence RF:
   un récepteur radiofréquence RF_E pour transmettre le signal radio fréquence reçu de l'antenne radiofréquence à un contrôleur habitacle, ce dernier autorisant l'ouverture des portes,
   une antenne radiofréquence RF_A avec les deux boucles orthogonales BH et BV, permettant de recevoir un signal radiofréquence issus d'un émetteur, ici par exemple la clef de contact avec fonction radiofréquence,
   deux circuits d'adaptation comprenant, dans cet exemple non limitatif, chacun un quadripôle Q1 et Q2 ayant comme fonction de filtrer les basses fréquences provenant du dispositif basse fréquence,
   et d'accorder l'antenne radiofréquence à la fréquence de travail de manière à ce que la démodulation du signal radiofréquence reçu se fasse correctement par le récepteur radiofréquence RF_E.
- Pour la partie basse fréquence BF :
   un émetteur-récepteur basse fréquence BF_T, appelé en anglais « transceiver »pour moduler/démoduler un signal basse fréquence, une antenne basse fréquence BF_A permettant de recevoir ou d'émettre un signal basse fréquence
   deux circuits « bouchons » comprenant, dans cet exemple non limitatif, chacun un dipôle Q3 et Q4 ayant comme fonction de filtrer les radiofréquences provenant du dispositif radiofréquence. On peut voir que l'alimentation de ladite antenne basse fréquence BF_A est réalisée par l'intermédiaire des circuits haute impédance, de type circuits bouchons, à la fréquence de travail de l'antenne radiofréquence. Autrement dit, l'alimentation est réalisée par l'émetteur-récepteur BF_T et se fait via les circuits bouchons Q3, Q4.

Dans cet exemple, les deux circuits bouchons Q3, Q4 se trouvent de part et d'autre de l'antenne basse fréquence, afin d'obtenir des circuits ouverts à la fréquence de travail de l'émetteur radio. Ainsi, on obtient un circuit ouvert du côté de la partie basse fréquence lorsque l'ensemble du système S fonctionne en radiofréquence diminuant toute perturbation due au couplage. Le fait de s'affranchir au maximum de ces perturbations permet en plus d'éviter d'avoir une résonance de l'antenne basse fréquence à la fréquence de travail de l'antenne radiofréquence.

Par contre, on aura un court-circuit du côté de la partie BF lorsque le système complet S fonctionne en basse fréquence.

De même, dans cet exemple, les deux circuits d'adaptation Q1, Q2, se trouvent de part et d'autre de l'antenne radiofréquence. Les circuits d'adaptation Q1, Q2 sont définis de telle sorte à accorder l'antenne RF à la fréquence de travail de l'émetteur radio.

Les dipôles Q3, Q4 comprennent ainsi, dans un exemple non limitatif, un filtre RLC coupe bande haute fréquence.

Les quadripôles Q1, Q2 comprennent ainsi, dans un exemple non limitatif, un filtre passe haut, et une structure en T ou en Π pour accorder l'antenne radiofréquence RF_A..

Dans un mode de réalisation non limitatif, le système S comporte en outre des moyens permettant d'augmenter le courant dans l'antenne basse fréquence afin d'obtenir une meilleure transmission entre l'antenne basse fréquence BF_A et, ici, par exemple la clef de contact avec la fonction basse fréquence. Ces moyens sont illustrés par une capacité C1 en série avec la bobine de l'antenne BF_A. On obtient ainsi une impédance globale plus faible, donc un courant plus fort, et un champ magnétique plus fort et une réception-émission améliorée. Donc, cela permet d'accorder l'antenne basse fréquence.

On notera que de façon pratique, le système S se décompose en :
- une carte électronique sur support de type PCB, comprenant notamment l'émetteur-récepteur basse fréquence BF_T, le récepteur radiofréquence RF_E, les circuits d'adaptation et « bouchons » Q1, Q2, Q3, et Q4, un micro-contrôleur permettant d'établir une communication avec des contrôleurs du véhicule tels que par exemple le contrôleur habitacle ou le contrôle moteur, et la capacité C1; et
- le dispositif d'antennes mixte RF/BF comprenant les antennes radiofréquence et basse fréquence, lesdites antennes étant reliées à la carte électronique par l'intermédiaire de leurs extrémités de connexion respectives CO et CB.

Dans un mode de réalisation non limitatif, la carte électronique est disposée sur un plan parallèle à une des boucles de l'antenne radiofréquence de manière à obtenir une optimisation du volume pris par le système S. Par exemple, la première boucle BH.

Bien entendu, l'invention n'est pas limitée à l'application décrite du véhicule automobile, mais peut être utilisé dans toutes applications faisant intervenir une antenne radiofréquence et une antenne basse fréquence telles qu'une application domotique.

## Revendications

1. Dispositif d'antennes (RF/BF) intégré dans l'habitacle d'un véhicule automobile qui comprend :
- une antenne radiofréquence (RF_A) à boucles orthogonales, destinée à la réception d'ondes électromagnétiques dans une bande de fréquence de l'ordre de la dizaine de mégahertz jusqu'au gigahertz,
- ladite antenne radiofréquence (RF_A) comprenant au moins deux boucles (BH, BV), chacune desdites boucles (BH, BV) pouvant être de forme quelconque et situées dans leur plan respectif, lesdits plans contenant chacun une desdites boucles (BH, BV) étant orthogonaux,
le dispositif comprend en outre :
- une antenne basse fréquence (BF_A) de type boucle multi spires (BB), opérant à des fréquences de l'ordre de la centaine de kilohertz jusqu'à peu près un mégahertz,
- l'une desdites deux boucles (BV) de ladite antenne radiofréquence (RF_A) étant située à proximité de ladite antenne boucle basse fréquence (BF A) de telle sorte qu'il existe un couplage électromagnétique entre ladite antenne radiofréquence (RF_ A) et ladite antenne boucle basse fréquence (BF_A)
**caractérisé en ce que** :
- les deux boucles (BH, BV) sont constituées d'un conducteur électrique unique (C),
- ladite boucle (BV) de ladite antenne radiofréquence (RF_ A) et ladite antenne boucle basse fréquence (BF_A) sont soit concentriques dans un même plan, soit situées dans des plans parallèles proche en comparaison à la taille de l'antenne.

2. Dispositif selon la revendication 1, **caractérisé en ce que** la forme des susdites boucles (BH, BV, BB) est circulaire ou carrée ou rectangulaire.

3. Dispositif selon la revendication 1, **caractérisé en ce que** la forme des susdites boucles (BH, BV) de l'antenne radiofréquence n'est pas identique.

4. Dispositif selon la revendication 1, **caractérisé en ce que** l'une desdites boucles de l'antenne radiofréquence est contenue dans un plan vertical (PV) et l'autre desdites boucles de l'antenne radiofréquence est contenue dans un plan horizontal (PH).

5. Dispositif selon la revendication 1, **caractérisé en ce que** la boucle de l'antenne radiofréquence de forme circulaire (BV) est située dans le plan vertical (PV) et la boucle de l'antenne radiofréquence de forme rectangulaire (BH) est située dans le plan horizontal (PH).

6. Dispositif selon la revendication 1, **caractérisé en ce que** le conducteur électrique (C, C') d'une antenne est réalisé dans un matériau à faible résistivité ohmique, tel du cuivre, de l'aluminium ou de ses alliages, du nickel, de l'argent, ou d'une association de plusieurs métaux, telle du cuivre recouvert d'une couche d'or.

7. Dispositif selon la revendication 1, **caractérisé en ce que** la section du conducteur électrique (C, C') est circulaire, carrée, rectangulaire ou quelconque.

8. Dispositif selon la revendication 1, **caractérisé en ce que** l'ensemble constitué desdites boucles (BH, BV, BB) est enrobé dans un matériau diélectrique tel un PTFE, PET, PVC, ou autres.

9. Dispositif selon la revendication 1, **caractérisé en ce qu'**il est adapté aux applications automobiles dans un endroit quelconque de l'habitacle du véhicule automobile.

10. Dispositif selon la revendication 9, **caractérisé en ce qu'**il est situé en haut de la colonne de direction ou dans un calculateur qui gère les capteurs et actionneurs dudit habitacle.

11. Dispositif selon la revendication 1, **caractérisé en ce que** l'antenne radiofréquence est surmoulé avec ladite antenne basse fréquence.

12. Dispositif selon la revendication 1, **caractérisé en ce que** ladite antenne basse fréquence est associée à des circuits, de type circuits bouchons (Q3, Q4), qui sont à haute impédance à la fréquence de travail de l'antenne radiofréquence.

13. Dispositif selon la revendication précédente, **caractérisé en ce que** les circuits de type « bouchons » (Q3, Q4) sont configurés pour permettre d'éviter une résonance de l'antenne basse fréquence à la fréquence de travail de l'antenne radiofréquence.

14. Dispositif selon la revendication 12, **caractérisé en ce que** les circuits de type « bouchons » comprennent un filtre coupe bande haute fréquence.

15. Dispositif selon la revendication 1, **caractérisé en ce que** lesdites boucles (BH, BV) de l'antenne radiofréquence sont connectée en série.

16. Dispositif selon la revendication 1, **caractérisé en ce que** lesdites boucles (BH, BV) de l'antenne radiofréquence sont connectées en parallèle.

17. Dispositif selon la revendication 1, **caractérisé en ce que** l'antenne radiofréquence (RF_A) comprend des circuits d'adaptation (Q1, Q2) configurés pour accorder ladite antenne.

18. Dispositif selon la revendication 1, **caractérisé en ce que** l'antenne basse fréquence est configurée pour être en charge de la fonction autorisant le démarrage.

19. Système électronique (S), **caractérisé en ce qu'**il comprend :
- un dispositif d'antennes (RF/BF) selon la revendication 1, et
- une carte électronique (PCB) associée au dispositif d'antennes (RF/BF) comprenant au moins un circuit de type « bouchon » (Q3, Q4), associé à l'antenne basse fréquence (BF_A), qui est à forte impédance à la fréquence de travail de l'antenne radiofréquence.

20. Système électronique, selon la revendication précédente, **caractérisé en ce que** la carte électronique (PCB) se situe dans un plan parallèle à une boucle de l'antenne radiofréquence (RF_A).

21. Système électronique, selon la revendication 19, **caractérisé en ce qu'**il comprend en outre une capacité (C1) en série avec l'antenne basse fréquence (BF_A).

22. Système électronique, selon la revendication 19, **caractérisé en ce qu'**il comprend en outre au moins un circuit d'adaptation (Q1, Q2) pour accorder l'antenne radiofréquence (RF_A).

23. Système électronique selon la revendication 19, **caractérisé en ce que** ladite carte électronique (PCB) comprend:
- un récepteur radiofréquence (RF_E) destiné à coopérer avec l'antenne radiofréquence (RF_A),
- un émetteur-récepteur (BF_T) basse fréquence destiné à coopérer avec l'antenne basse fréquence (BF_A),
- au moins un circuit, de type circuit « bouchon », (Q3, Q4) associé à l'antenne basse fréquence, qui est à haute impédance à la fréquence de travail de l'antenne radiofréquence.

24. Système électronique selon la revendication 22, **caractérisé en ce que** ledit circuit d'adaptation (Q1, Q2) pour accorder l'antenne radiofréquence (RF_A) est situé sur la carte électronique.

## Patentansprüche

1. Antennenvorrichtung (RF/BF), die in dem Fahrgastraum eines Kraftfahrzeugs integriert ist, die aufweist:
- eine Funkfrequenzantenne (RF_A) mit orthogonalen Schleifen, die zum Empfangen von elektromagnetischen Wellen in einem Frequenzband in der Größenordnung von ungefähr zehn Megahertz bis zu Gigahertz zu empfangen,
- wobei die Funkfrequenzantenne (RF_A) mindestens zwei Schleifen (BH, BV) aufweist, wobei jede der Schleifen (BH, BV) von beliebiger Form sein kann und sie in ihrer jeweiligen Ebene angeordnet sind, wobei die Ebenen jeweils eine der Schleifen (BH, BV) enthalten, die orthogonal sind,
die Vorrichtung weist ferner auf:
- eine Niederfrequenzantenne (BF_A) vom Typ der Mehrwindungs-Schleifenantenne (BB), die bei Frequenzen in der Größenordnung von etwa hundert Kilohertz bis etwa ein Megahertz betrieben wird,
- wobei eine der zwei Schleifen (BV) der Funkfrequenzantenne (RF_A) in der Nähe der Niederfrequenz-Schleifenantenne (BF A) derart angeordnet ist, dass eine elektromagnetische Kopplung zwischen der Funkfrequenzantenne (RF_A) und der Niederfrequenzantenne (BF_A) besteht,
**dadurch gekennzeichnet, dass**:
- die zwei Schleifen (BH, BV) aus einem einzigen elektrischen Leiter (C) gebildet sind,
- die Schleife (BV) der Funkfrequenzantenne (RF_A) und die Niederfrequenzantenne (BF_A) entweder in einer gleichen Ebene konzentrisch sind oder in parallelen Ebenen im Vergleich zu der Größe der Antenne nahe angeordnet sind.

2. Vorrichtung nach Anspruch 1, **dadurch gekennzeichnet, dass** die Form der Schleifen (BH, BV, BB) kreisförmig oder quadratisch oder rechteckig ist.

3. Vorrichtung nach Anspruch 1, **dadurch gekennzeichnet, dass** die Form der Schleifen (BH, BV) der Funkfrequenzantenne nicht identisch ist.

4. Vorrichtung nach Anspruch 1, **dadurch gekennzeichnet, dass** eine der Schleifen der Funkfrequenzantenne in einer vertikalen Ebene (PV) enthalten ist und die andere der Schleifen der Funkfrequenzantenne in einer horizontalen Ebene (PH) enthalten ist.

5. Vorrichtung nach Anspruch 1, **dadurch gekennzeichnet, dass** die Schleife der Funkfrequenzantenne von kreisförmiger Form (BV) in der vertikalen Ebene (PV) angeordnet ist und die Schleife der Funkfrequenzantenne von rechteckiger Form (BH) in der horizontalen Ebene (PH) angeordnet ist.

6. Vorrichtung nach Anspruch 1, **dadurch gekennzeichnet, dass** der elektrische Leiter (C, C') einer Antenne aus einem Material mit geringem ohmschen Widerstand hergestellt ist, wie Kupfer, Aluminium oder dessen Legierungen, Nickel, Silber oder einer Kombination mehrerer Metalle, wie beispielsweise Kupfer, das mit einer Goldschicht bedeckt ist.

7. Vorrichtung nach Anspruch 1, **dadurch gekennzeichnet, dass** der Querschnitt des elektrischen Leiters (C, C') kreisförmig, quadratisch, rechteckig oder von beliebiger anderer Form ist.

8. Vorrichtung nach Anspruch 1, **dadurch gekennzeichnet, dass** die Anordnung, die aus den Schleifen (BH, BV, BB) gebildet ist, in ein dielektrisches Material wie PTFE, PET, PVC oder dergleichen eingebettet ist.

9. Vorrichtung nach Anspruch 1, **dadurch gekennzeichnet, dass** sie für die Automobilanwendungen an einer beliebigen Stelle in dem Fahrgastraum des Kraftfahrzeugs geeignet ist.

10. Vorrichtung nach Anspruch 9, **dadurch gekennzeichnet, dass** sie oben an der Lenksäule oder in einem Rechner, der die Sensoren und die Stellglieder des Fahrgastraums verwaltet, angeordnet ist.

11. Vorrichtung nach Anspruch 1, **dadurch gekennzeichnet, dass** auf die Funkfrequenzantenne die Niederfrequenzantenne aufgeformt ist.

12. Vorrichtung nach Anspruch 1, **dadurch gekennzeichnet, dass** die Niederfrequenzantenne mit Schaltungen des Typs der Sperrschaltungen (Q3, Q4) verbunden ist, die bei der Arbeitsfrequenz der Funkfrequenzantenne mit hoher Impedanz sind.

13. Vorrichtung nach dem vorhergehenden Anspruch, **dadurch gekennzeichnet, dass** die Schaltungen des Typs der "Sperrschaltungen" (Q3, Q4) konfiguriert sind, um zu ermöglichen, dass eine Resonanz der Niederfrequenzantenne bei der Arbeitsfrequenz der Funkfrequenzantenne verhindert wird.

14. Vorrichtung nach Anspruch 12, **dadurch gekennzeichnet, dass** die Schaltungen des Typs der "Sperrschaltungen" einen Hochfrequenz-Bandsperrfilter aufweisen.

15. Vorrichtung nach Anspruch 1, **dadurch gekennzeichnet, dass** die Schleifen (BH, BV) der Funkfrequenzantenne in Reihe geschaltet sind.

16. Vorrichtung nach Anspruch 1, **dadurch gekennzeichnet, dass** die Schleifen (BH, BV) der Funkfrequenzantenne parallel geschaltet sind.

17. Vorrichtung nach Anspruch 1, **dadurch gekennzeichnet, dass** die Funkfrequenzantenne (RF_A) Anpassungsschaltungen (Q1, Q2) aufweist, die konfiguriert sind, um die Antenne abzustimmen.

18. Vorrichtung nach Anspruch 1, **dadurch gekennzeichnet, dass** die Niederfrequenzantenne konfiguriert ist, um die Funktion zu übernehmen, die die Inbetriebnahme genehmigt.

19. Elektronisches System (S), **dadurch gekennzeichnet, dass** es aufweist:
- eine Antennenvorrichtung (RF/BF) nach Anspruch 1 und
- eine elektronische Karte (PCB), die mit der Antennenvorrichtung (RF/BF) verbunden ist, die mindestens eine Schaltung des Typs der "Sperrschaltung" (Q3, Q4) aufweist, die mit der Niederfrequenzantenne (BF_A) verbunden ist, die bei der Arbeitsfrequenz der Funkfrequenzantenne mit hoher Impedanz ist.

20. Elektronisches System nach dem vorhergehenden Anspruch, **dadurch gekennzeichnet, dass** sich die elektronische Karte (PCB) in einer Ebene befindet, die parallel zu einer Schleife der Funkfrequenzantenne (RF_A) ist.

21. Elektronisches System nach Anspruch 19, **dadurch gekennzeichnet, dass** es ferner eine Kapazität (C1) aufweist, die mit der Niederfrequenzantenne (BF_A) in Reihe geschaltet ist.

22. Elektronisches System nach Anspruch 19, **dadurch gekennzeichnet, dass** es ferner mindestens eine Anpassungsschaltung (Q1, Q2) aufweist, um die Funkfrequenzantenne (RF_A) abzustimmen.

23. Elektronisches System nach Anspruch 19, **dadurch gekennzeichnet, dass** die elektronische Karte (PCB) aufweist:
- einen Funkfrequenzempfänger (RF_E), der dazu bestimmt ist, mit der Funkfrequenzantenne (RF_A) zusammenzuwirken,
- einen Niederfrequenz-Sender-Empfänger (BF_T), der dazu bestimmt ist, mit der Niederfrequenzantenne (BF_A) zusammenzuwirken,
- mindestens eine Schaltung des Typs der "Sperrschaltung" (Q3, Q4), die mit der Niederfrequenzantenne verbunden ist, die bei der Arbeitsfrequenz der Funkfrequenzantenne mit hoher Impedanz ist.

24. Elektronisches System nach Anspruch 22, **dadurch gekennzeichnet, dass** die Anpassungsschaltung (Q1, Q2), um die Funkfrequenzantenne (RF_A) abzustimmen, auf der elektronischen Karte angeordnet ist.

## Claims

1. Antenna device (RF/BF) integrated into the passenger compartment of a motor vehicle, which comprises:
- a radiofrequency antenna (RF_A) with orthogonal loops, intended to receive electromagnetic waves in a frequency band of the order of around ten megahertz up to one gigahertz,
- said radiofrequency antenna (RF_A) comprising at least two loops (BH, BV), each of said loops (BH, BV) being able to be of any shape and situated in their respective planes, said planes which each contain one of said loops (BH, BV) being orthogonal,
the device furthermore comprises:
- a low-frequency antenna (BF_A) of multi-turn loop type (BB), operating at frequencies of the order of around one hundred kilohertz up to close to one megahertz,
- one of said two loops (BV) of said radiofrequency antenna (RF_A) being situated close to said low-frequency loop antenna (BF_A) such that there is electromagnetic coupling between said radiofrequency antenna (RF_A) and said low-frequency loop antenna (BF_A),
**characterized in that**:
- the two loops (BH, BV) are formed of a single electrical conductor (C),
- said loop (BV) of said radiofrequency antenna (RF_A) and said low-frequency loop antenna (BF_A) are either concentric in one and the same plane or situated in parallel planes that are close in comparison with the size of the antenna.

2. Device according to Claim 1, **characterized in that** the shape of said loops (BH, BV, BB) is circular or square or rectangular.

3. Device according to Claim 1, **characterized in that** the shape of said loops (BH, BV) of the radiofrequency antenna is not identical.

4. Device according to Claim 1, **characterized in that** one of said loops of the radiofrequency antenna is contained within a vertical plane (PV) and the other of said loops of the radiofrequency antenna is contained within a horizontal plane (PH).

5. Device according to Claim 1, **characterized in that** the loop of the radiofrequency antenna of circular shape (BV) is situated in the vertial plane (PV) and the loop of the radiofrequency antenna of rectangular shape (BH) is situated in the horizontal plane (PH).

6. Device according to Claim 1, **characterized in that** the electrical conductor (C, C') of one antenna is made of a material of low ohmic resistivity, such as copper, aluminum or its alloys, nickel, silver or of an association of several metals, such as copper coated with a layer of gold.

7. Device according to Claim 1, **characterized in that** the cross section of the electrical conductor (C, C') is circular, square, rectangular or of any given shape.

8. Device according to Claim 1, **characterized in that** the assembly formed by said loops (BH, BV, BB) is coated with a dielectric material such as PTFE, PET, PVC, or others.

9. Device according to Claim 1, **characterized in that** it is designed for motor vehicle applications in any given location within the passenger compartment of the motor vehicle.

10. Device according to Claim 9, **characterized in that** it is situated at the top of the steering column or within a processor that manages the sensors and actuators of said passenger compartment.

11. Device according to Claim 1, **characterized in that** the radiofrequency antenna is molded together with said low-frequency antenna.

12. Device according to Claim 1, **characterized in that** said low-frequency antenna is associated with circuits, of the tank circuit type (Q3, Q4), which present a high impedance at the working frequency of the radiofrequency antenna.

13. Device according to the preceding claim, **characterized in that** the tank circuits (Q3, Q4) are configured to prevent a resonance of the low-frequency antenna at the working frequency of the radiofrequency antenna.

14. Device according to Claim 12, **characterized in that** the tank circuits comprise a high-frequency notch filter.

15. Device according to Claim 1, **characterized in that** said loops (BH, BV) of the radiofrequency antenna are connected in series.

16. Device according to Claim 1, **characterized in that** said loops (BH, BV) of the radiofrequency antenna are connected in parallel.

17. Device according to Claim 1, **characterized in that** the radiofrequency antenna (RF_A) comprises matching circuits (Q1, Q2) configured to tune said antenna.

18. Device according to Claim 1, **characterized in that** the low-frequency antenna is configured to be responsible for the function authorizing start-up.

19. Electronic system (S), **characterized in that** it comprises:
- an antenna device (RF/LF) according to Claim 1, and
- an electronic board (PCB) associated with the antenna device (RF/LF) comprising at least one tank circuit (Q3, Q4), associated with the low-frequency antenna (LF_A), which exhibits a high impedance at the working frequency of the radiofrequency antenna.

20. Electronic system according to the preceding claim, **characterized in that** the electronic board (PCB) is situated in a plane parallel to one loop of the radiofrequency antenna (RF_A).

21. Electronic system according to Claim 19, **characterized in that** it also comprises a capacitor (C1) in series with the low-frequency antenna (LF_A).

22. Electronic system, according to Claim 19, **characterized in that** it also comprises at least one matching circuit (Q1, Q2) for tuning the radiofrequency antenna (RF_A).

23. Electronic system according to Claim 19, **characterized in that** said electronic board (PCB) comprises:
- a radiofrequency receiver (RF_E) designed to cooperate with the radiofrequency antenna (RF_A);
- a low-frequency transceiver (LF_T) designed to cooperate with the low-frequency antenna (LF_A); and
- at least one tank circuit (Q3, Q4) associated with the low-frequency antenna which presents a high impedance at the working frequency of the radiofrequency antenna.

24. Electronic system according to Claim 22, **characterized in that** said matching circuit (Q1, Q2) for tuning the radiofrequency antenna (RF_A) is situated on the electronic board.
